Europäisches Patentamt

European Patent Office

Office européen des brevets

(11) Veröffentlichungsnummer: **0 288 660**

**A2**

## EUROPÄISCHE PATENTANMELDUNG

(21) Anmeldenummer: 88101044.1

(22) Anmeldetag: 25.01.88

(51) Int. Cl.⁴: **B23Q 5/10**

(30) Priorität: 30.04.87 DE 3714562

(43) Veröffentlichungstag der Anmeldung:
02.11.88 Patentblatt 88/44

(84) Benannte Vertragsstaaten:
AT BE CH DE ES FR GB GR IT LI LU NL SE

(71) Anmelder: **Friedrich Deckel Aktiengesellschaft Plinganserstrasse 150 D-8000 München 70(DE)**

(72) Erfinder: **Schneider, Manfred Luisenstrasse 28 D-7141 Grossbottwar(DE)**
Erfinder: **Driesner, Bernd Birkenstrasse 183 D-8122 Penzberg(DE)**
Erfinder: **Lützkendorf, Jörg Beethovenstrasse 57 D-7140 Ludwigsburg(DE)**

(54) Werkzeugspindelanordnung mit einem elektrischen Antriebsmotor.

(57) Die Erfindung betrifft eine Werkzeugspindelanordnung mit einer in einem Spindelgehäuse (2) drehbar gelagerten Arbeitsspindel und einem mit der Arbeitsspindel antriebsverbundenen elektrischen Antriebsmotor (20), wobei die Arbeitsspindel zur Aufnahme von Funktionselementen der Spindelanordnung hohl ausgebildet ist. Es wird vorgeschlagen, daß die Motorwelle des elektrischen Antriebsmotors (20) selbst als Arbeitsspindel ausgebildet ist.

Die Arbeitsspindel ist Teil des Antriebsmotors (20). Sie ist vorzugsweise zweiteilig ausgebildet mit einem Spindelabschnitt (14) und einem Motorwellenabschnitt (22), die beim Anbau des Antriebsmotors (20) an die Maschine miteinander gekuppelt werden. Der Motorwellenabschnitt (22) ist ebenfalls hohl ausgebildet zur Aufnahme von Funktionselementen, z.B. Spannorganen (44) für die Werkzeugspannung, Blasluftleitungen (66), Kühlmittelleitungen (46) etc.

EP 0 288 660 A2

# Werkzeugspindelanordnung mit einem elektrischen Antriebsmotor

Die Erfindung betrifft eine Werkzeugspindelanordnung der im Oberbegriff des Anspruches 1 genannten Art.

Derartige Werkzeugspindelanordnungen sind im modernen Werkzeugmaschinenbau üblich. Der Antrieb derartiger Spindelanordnungen erfolgt im allgemeinen über eine direkt an der Außenseite der Spindel ausgebildete Verzahnung oder ein auf der Spindel drehfest angeordnetes Zahnrad und ein damit zusammenwirkendes, mit einem Antriebsmotor und gegebenenfalls einem diesem nachgeschalteten getriebeverbundenes Antriebsritzel. Der Antriebsmotor - und gegebenenfalls das Getriebe - befinden sich radial neben der Werkzeugspindel, so daß sich im allgemeinen ein großes und störendes Bauvolumen ergibt. Eine Anordnung des Antriebsmotors und eines damit verbundenen Getriebes in axialer Verlängerung der Spindel an deren rückwärtigem Ende ist im allgemeinen nicht möglich, da sich an dieser Stelle Einrichtungen der im Inneren der hohlen Arbeitsspindel angeordneten Funktionselemente, beispielsweise Werkzeugspanner, Ausblasluftleitungen usw., befinden.

Ein weiterer Nachteil der bekannten Werkzeugspindelanordnungen wird darin gesehen, daß in jedem Fall, auch wenn der Antriebsmotor drehzahlgeregelt ist und ein Getriebe entfallen kann, eine Drehmomentübertragung über eine Verzahnungspaarung stattfindet, was in be kannter Weise eine Geräusch-und Wärmeerzeugung zur Folge hat und eine Schmierung erforderlich macht.

Es ist die Aufgabe der vorliegenden Erfindung, eine Werkzeugspindelanordnung der im Oberbegriff des Anspruches 1 genannten Art zu schaffen, die einen geringen Bauaufwand erfordert und bei der eine Leistungsübertragung über Zahnradpaarungen vermieden wird.

Diese Aufgabe ist erfindungsgemäß durch die im Kennzeichen des Anspruches 1 enthaltenen Merkmale gelöst.

Die Motorwelle des elektrischen Antriebsmotors ist selbst als Arbeitsspindel mit allen zugehörigen Funktionskomponenten ausgebildet. Damit können die radialen Bauabmessungen der gesamten Anordnung auf ein Minimum, nämlich den Außenumfang des Antriebsmotors selbst, reduziert werden. Jegliche Leistungsübertragung über eine Zahnradpaarung und damit jegliche Geräusch-und Wärmeerzeugung sowie die Notwendigkeit einer Schmierung entfallen. Das rückwärtige Spindelende bleibt nach wie vor für die Anordnung der Betätigungseinrichtungen zur Betätigung der innerhalb der Antriebsspindel angeordneten Funktionselemente frei.

Wenn die Werkzeugspindel mit einer einzigen Drehzahl betrieben wird, so genügt als Antriebsmotor ein Elektromotor mit fester Betriebsdrehzahl. In bevorzugter Ausgestaltung der Erfindung ist jedoch der Antriebsmotor drehzahlverstellbar ausgebildet.

Im allgemeinen wird die Arbeitsspindel vom Hersteller der Werkzeugmaschine hergestellt, während der Antriebsmotor und damit auch die Motorwelle Zulieferteile sind. Es ist deshalb in einer Ausgestaltung der vorliegenden Erfindung vorgesehen, daß die Arbeitsspindel aus einem außerhalb des Antriebsmotors liegenden vorderen Spindelabschnitt und einem dazu koaxialen, im wesentlichen innerhalb des Antriebsmotors liegenden, mit dem Spindelabschnitt drehverbindbaren Motorwellenabschnitt besteht. Beide Abschnitte sind baulich, beispielsweise hinsichtlich ihrer Außenabmessungen und des inneren Hohlraumes, exakt aufeinander abgestimmt. Der Spindelabschnitt ist vorzugsweise in einem eigenen Spindelgehäuse, der Motorwellenabschnitt in einem Motorgehäuse gelagert. Bei der Montage der Werkzeugmaschine wird das Motorgehäuse am Spindelgehäuse befestigt und gleichzeitig der Motorwellenabschnitt, der an seinen beiden Wellenenden zugänglich ist, mit dem Spindelabschnitt gekuppelt. Gleichzeitig werden auch innerhalb des Spindelabschnittes angeordnete Funktionselemente der Spindelanordnung mit entsprechenden, im Motorwellenabschnitt angeordneten Funktionselementen gekuppelt, wie anhand eines Ausführungsbeispiels genauer erläutert wird.

Der Antriebsmotor ist in bevorzugter Ausgestaltung der Erfindung als sogenanter Innenläufermotor mit einem unmittelbar auf dem Motorwellenabschnitt angeordneten inneren Rotor und einem im Motorgehäuse angeordneten, den Rotor umfassenden Stator ausgebildet.

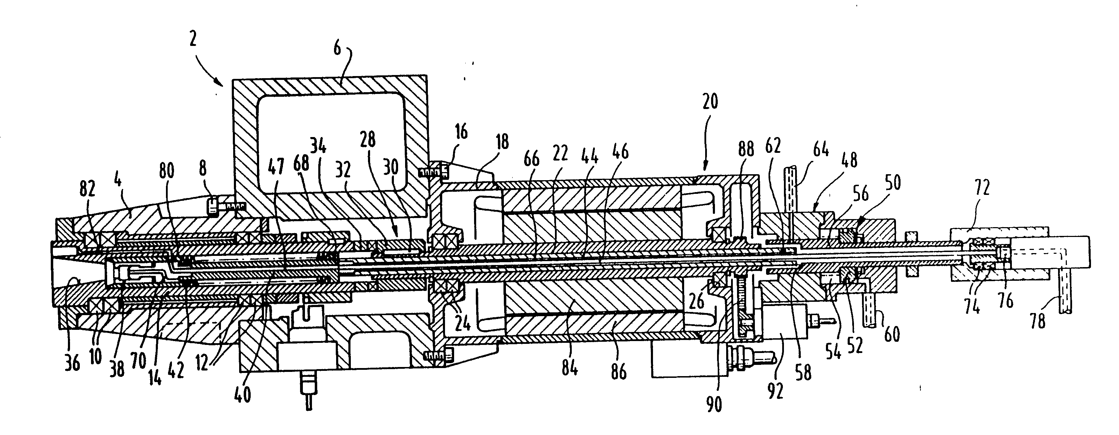

Weitere Ausgestaltungen der Erfindung ergeben sich aus den Unteransprüchen und der Beschreibung eines Ausführungsbeispiels. Ein derartiges Ausführungsbeispiel ist in der Zeichnung dargestellt und im folgenden näher erläutert.

Die Figur zeigt einen Längsschnitt durch eine Werkzeugspindelanordnung mit einem vorderen Spindelabschnitt und einem damit gekuppelten, hinteren Motorwellenabschnitt.

Das in der Figur dargestellte Spindelgehäuse 2 besteht aus einem vorderen Gehäuseteil 4 und einem hinteren Gehäuseteil 6, die mittels Schrauben 8 miteinander verschraubt sind. Im Spindelgehäuse 2 ist über die Lager 10 und 12 der vordere Spindelabschnitt 14 drehbar gelagert.

Am hinteren Gehäuseteil 6 des Spindelgehäuses 2 ist mittels der Schrauben 16 das Motorgehäuse 18 eines elektrischen Antriebsmotors 20 befestigt. Im Motorgehäuse 18 ist ein Motorwellenabschnitt 22 über die Lager 24 und 26 drehbar gelagert. Der Motorwellenabschnitt 22 ist über die Kupplungsmittel 28 mit dem vorderen Spindelabschnitt 14 drehverbunden. Diese Kupplungsmittel umfassen eine auf dem Motorwellenabschnitt 22 angeordnete, über einen Mitnehmerkeil 30 drehverbundene Klauenmuffe 32, die in am rückwärtigen Ende des Spindelabschnittes 14 ausgebildete Klauen 34 eingreift, wie an sich bekannt ist und deshalb nicht näher beschrieben wird.

Am vorderen, in der Figur linken Ende des Spindelabschnittes 14 ist eine Werkzeugaufnahme 36 ausgebildet, in die Werkzeuge eingesetzt werden können. Im Spindelabschnitt 14 ist eine an sich bekannte, axial verschiebbare Spannzange 38 angeordnet, durch die das Werkzeug in die Werkzeugaufnahme 36 hineingezogen werden kann. Die Spannzange ist mit einer Spannstange 40 verbunden, die über ein Tellerfederpaket 42 in Spannrichtung belastet wird; wie aus der Figur erkennbar ist, wird das Werkzeug durch eine nach rechts gerichtete Bewegung der Spannstange 40 gespannt, durch eine nach links gerichtete Bewegung hingegen freigegeben und ausgestossen.

Im Motorwellenabschnitt 22 ist eine axial verschiebbare, hohle Betätigungsstange 44 angeordnet. Innerhalb der Betätigungsstange 44 befindet sich eine Rohrleitung 46. Die Betätigungsstange 44 ist mit ihrem der Spannstange 40 zugewandten Ende mit dieser verbunden. Die Rohrleitung 46 ist mit ihrem der Spannstange 40 zugewandten Ende in eine in der Spannstange ausgebildete Aufnahmebohrung eingeschraubt und bildet die Fortsetzung eines in der Spannstange 40 ausgebildeten, zentralen Kühlmittelkanals 48. Da die Spannstange 40 zusammen mit dem Spindelabschnitt 14 rotiert, rotieren auch die Betätigungsstange 44 und die Rohrleitung 46 um die Spindelachse.

Das in der Figur rechte Ende der Betätigungsstange 44 ragt über den Motorwellenabschnitt 22 hinaus und in einen Gehäuseteil 48 hinein, welcher hydraulische Betätigungsmittel 50 für die axiale Verschiebung der Betätigungsstange 44 aufnimmt. Diese Betätigungsmittel 50 umfassen einen hydraulischen Kolben 52, welcher verschiebbar in dem Zylinder 54 angeordnet ist. Der Kolben 52 ist selbst mit einer im Gehäuseteil 48 verschiebbar angeordneten Betätigungshülse 56 verbunden, die einen dem rechten Ende der Betätigungsstange 44 gegenüberliegenden Absatz 58 aufweist. Über eine Hydraulikleitung 60 kann dem Zylinder 54 ein Druckfluid zugeführt werden, durch welches der Kolben 52 in der Figur nach links verschoben wird. Dabei kommt der Absatz 58 zur Anlage an die Betätigungsstange 44, die ebenfalls nach links verschoben wird. Die Betätigungsstange 44 betätigt die Spannstange 40 gegen die Kraft des Tellerfederpaketes öst dabei in bekannter Weise die Spannzange 38. Wenn die Hydraulikleitung 60 mit einem Rücklauf verbunden wird, werden die Spannstange 40, die Betätigungsstange 44, die Betätigungshülse 56 und der Kolben 52 durch das Tellerfederpaket 42 wieder in die rechte Ausgangslage zurückverschoben und ein in der Werkzeugaufnahme 36 befindliches Werkzeug gespannt.

Die Rohrleitung 46 ist mit einem allseitigen Spiel innerhalb der Spannstange 44 angeordnet. Der zwischen der Rohrleitung 46 und der Spannstange 44 gebildete Ringraum ist auf seiner in der Figur rechten Seite zum Innenraum des Gehäuseteils 48 hin offen und zusätzlich mit diesem über eine Verbindungsbohrung 62 verbunden. Über eine Druckluftleitung 64 kann dem Innenraum des Gehäuseteils 48 und damit dem die Rohrleitung 46 umgebenden Ringraum 66 Druckluft zugeführt werden. Der Ringraum 66 ist an seinem in der Figur linken Ende über eine Verbindungsbohrung 68 mit dem das Tellerfederpaket 42 aufnehmenden Ringraum verbunden, welcher seinerseits über eine weitere, gekröpfte Verbindungsbohrung 70 in die Werkzeugaufnahme 36 mündet. Auf diesem Wege kann die Werkzeugaufnahme 36 von Verunreinigungen freigeblasen werden.

Die Rohrleitung 46 ragt mit ihrem in der Figur rechten Ende über das Ende der Spannstange 44 hinaus bis in ein Gehäuseteil 72 hinein, welches am rechten Ende der Betätigungshülse 56 befestigt ist. Da die Rohrleitung mit der Spindel umläuft, ist sie über Lager 74 im Gehäuseteil 72 gelagert. Das rechte Ende der Rohrleitung 46 ist in an sich bekannter Weise über einen Drehanschluß 76 mit einer Kühlmittelleitung 78 verbunden. Das zugeführte Kühlmittel gelangt über die Rohrleitung 46 und die in der Spannstange 50 ausgebildete zentrale Bohrung 47 sowie die daran anschließenden Kanalabschnitte 80, 82 zur Stirnseite des Spindelabschnittes 14 und vorn dort in an sich bekannter Weise in Kühlmittelkanäle von in die Spindelaufnahme 36 eingesetzten Werkzeugen.

Wie die Figur weiter erkennen läßt, ist der Antriebsmotor 20 als Innenläufermotor ausgebildet. Der Rotor 84 ist mit dem Motorwellenabschnitt 22 direkt verbunden. Der Stator 86 ist fest im Motorgehäuse 18 angeordnet.

Am in der Figur rechten Ende des Motorwellenabschnittes 22 ist eine Verzahnung 88 ausgebildet, die über einen Zahnriemen 90 mit einem Drehgeber 92 verbunden ist, welcher in an sich bekannter Weise Informationen aus dem Betrieb des Antriebsmotors 20 an eine Steuerung liefert.

**Ansprüche**

1. Werkzeugspindelanordnung mit einer in einem Spindelgehäuse drehbar gelagerten Arbeitsspindel und einem mit der Arbeitsspindel antriebsverbundenen elektrischen Antriebsmotor, wobei die Arbeitsspindel zur Aufnahme von Funktionselementen der Spindelanordnung hohl ausgebildet ist, dadurch **gekennzeichnet,** daß die Motorwelle des elektrischen Antriebsmotors (20) als Arbeitsspindel ausgebildet ist.

2. Werkzeugspindelanordnung nach Anspruch 1, dadurch **gekennzeichnet,** daß die Arbeitsspindel aus einem außerhalb des Antriebsmotors (20) liegenden vorderen Spindelabschnitt (14) und einem dazu koaxialen , im wesentlichen innerhalb des Antriebsmotors (20) liegenden, mit dem Spindelabschnitt (14) drehverbundenen Motorwellenabschnitt (22) besteht.

3. Werkzeugspindelanordnung nach Anspruch 2, dadurch **gekennzeichnet,** daß der Spindelabschnitt (14) im Spindelgehäuse (2) und der Motorwellenabschnitt (22) in einem Motorgehäuse (18) gelagert sind.

4. Werkzeugspindelanordnung nach Anspruch 3, dadurch **gekennzeichnet,** daß das Motorgehäuse (18) am Spindelgehäuse (2) befestigt ist.

5. Werkzeugspindelanordnung nach einem der Ansprüche 2 bis 4, dadurch**gekennzeichnet,** daß der Motorwellenabschnitt (22) an seinen beiden Wellenenden zugänglich ist.

6. Werkzeugspindelanordnung nach einem der Ansprüche 2 bis 5, dadurch**gekennzeichnet,** daß der Motorwellenabschnitt (22) an seinem dem Spindelabschnitt (14) zugewandten Ende mit Kupplungsmitteln (28) versehen ist, die mit am Spindelabschnitt (14) angeordneten Kupplungsmitteln (34) zusammenwirken.

7. Werkzeugspindelanordnung nach einem der Ansprüche 2 bis 6, dadurch **gekennzeichnet,** daß in dem Motorwellenabschnitt (22) eine an beiden Wellenenden über diese hinausstehende Betätigungsstange (44) axial verschiebbar angeordnet ist, welche mit einer im Spindelabschnitt (14) angeordneten Spannstange (40) eines Werkzeugspanners verbunden ist.

8. Werkzeugspindelanorndung nach einem der Ansprüche 2 bis 7, dadurch **gekennzeichnet,** daß in dem Motorwellenabschnitt (22) ein diesen auf seiner ganzen axialen Länge durchsetzender Kühlmittelkanal ausgebildet ist.

9. Werkzeugspindelanordnung nach einem der Ansprüche 2 bis 8, dadurch **gekennzeichnet,** daß in dem Motorwellenabschnitt (22) ein diesen auf seiner ganzen axialen Länge durchsetzender Blasluftkanal ausgebildet ist.

10. Werkzeugspindelanordnung nach Anspruch 8 oder 9, dadurch **gekennzeichnet,** daß die Betätigungsstange (44) hohl ausgebildet ist und daß der Kühlmittelkanal durch eine innerhalb der Betätigungsstange angeordnete Rohrleitung (46) gebildet ist.

11. Werkzeugspindelanordnung nach Anspruch 10, dadurch **gekennzeichnet,** daß die Rohrleitung (46) koaxial zur Betätigungsstange (44) mit allseitigem Abstand zur Innenwandfläche der Betätigungsstange (44) angeordnet ist und daß der zwischen der Rohrleitung (46) und der Betätigungsstange (44) bestehende Ringraum (66) als Blasluftkanal dient.

12. Werkzeugspindelanordnung nach einem der Ansprüche 2 bis 11, dadurch **gekennzeichnet,** daß der Antriebsmotor (20) als Innenläufermotor mit einem unmittelbar auf dem Motorwellenabschnitt (22) angeordneten inneren Rotor (84) und einem im Motorgehäuse (18) angeordneten, den Rotor (84) umfassenden Stator (86) ausgebildet ist.

13. Werkzeugspindelanordnung nach einem der Ansprüche 1 bis 12, dadurch **gekennzeichnet,** daß der Antriebsmotor (20) drehzahlverstellbar ist.

14. Werkzeugspindelanordnung nach einem der Ansprüche 2 bis 13, dadurch**gekennzeichnet,** daß an dem dem Spindelabschnitt (14) abgewandten Ende des Motorwellenabschnittes (22) Kupplungsmittel (88, 90) für die Ankupplung eines Drehgebers (92) vorgesehen sind.